## Europäisches Patentamt

## European Patent Office

## Office européen des brevets

(19)

(11) Veröffentlichungsnummer: **0 087 521**
**B1**

(12)

# EUROPÄISCHE PATENTSCHRIFT

(45) Veröffentlichungstag der Patentschrift:
03.05.89

(51) Int. Cl.⁴: **G 01 D 5/02**

(21) Anmeldenummer: **82111996.3**

(22) Anmeldetag: **24.12.82**

(54) Winkelmesseinrichtung.

(30) Priorität: **26.02.82 DE 3206875**

(43) Veröffentlichungstag der Anmeldung:
**07.09.83 Patentblatt 83/36**

(45) Bekanntmachung des Hinweises auf die Patenterteilung:
**03.05.89 Patentblatt 89/18**

(84) Benannte Vertragsstaaten:
**AT CH FR GB IT LI NL SE**

(56) Entgegenhaltungen:
**DE-A- 2 917 708**
**DE-B- 2 906 432**
**FR-A- 2 142 486**
**FR-A- 2 360 379**
**FR-A- 2 421 709**
**GB-A- 1 522 829**
**US-A- 2 465 497**
**US-A- 4 075 478**
**US-A- 4 386 270**

(73) Patentinhaber: **Dr. Johannes Heidenhain GmbH,
Nansenstrasse 17, D-8225 Traunreut (DE)**

(72) Erfinder: **Ernst, Alfons, Dipl.-Ing., Traunring 62,
D-8225 Traunreut (DE)**

## Beschreibung

Die Erfindung betrifft eine Winkelmeßeinrichtung gemäß dem Oberbegriff des Anspruchs 1.

Eine solche Winkelmeßeinrichtung ist in der DE-GM 8 116 787 beschrieben, bei der in einem Gehäuse die Teilung einer an einer drehbaren Welle befestigten Teilscheibe, die mit dem drehbaren Objekt verbunden ist, von einer Abtasteinheit abgetastet wird, die mit dem stationären Objekt verbunden ist.

Bei Winkelmeßeinrichtungen ist es weiter bekannt, das Gehäuse an einem zu messenden Maschinenteil anzuschrauben oder anzuklemmen und die Welle mitsamt der Teilscheibe über eine flexible, aber möglichst verdrehsteife Kupplung mit einer Spindel oder einem anderen drehbaren Maschinenteil zu koppeln.

Eine derartige Winkelmeßeinrichtung weist aber den Nachteil auf, daß die Kupplung außerhalb des Gehäuses einen zusätzlichen Raum beansprucht und speziell bei einer Hohlwelle Probleme aufwirft, da es schwierig ist, eine Kupplung zu konstruieren, die eine hohe Winkelübertragungsgenauigkeit und eine große Drehsteifigkeit aufweist und dabei relativ große Winkelfluchtungsfehler ausgleichen kann. Bei großen Winkelbeschleunigungen des drehbaren Maschinenteils wirken sich die unvermeidlichen Torsionsschwingungen der Kupplung ungünstig auf den Lageregelkreis einer numerischen Steuerung für die Maschine aus.

Weiterhin sind Winkelmeßeinrichtungen bekannt, bei denen die Welle mit der Teilscheibe starr an einer Spindel der Maschine befestigt ist und das Gehäuse durch einen Mitnehmer oder eine Gelenkschwinge gegen ein Verdrehen gesichert ist.

Ein Nachteil einer solchen Winkelmeßeinrichtung besteht darin, daß die unvermeidlichen Exzentrizitäten der Welle, der Wellenverbindung mit der Spindel usw. zusammen mit dem Abstand der Gelenkschwinge oder des Mitnehmers von der Wellenachse einen Winkelfehler ergeben, der für Präzisionsmessungen nicht tragbar ist. Ein weiterer Nachteil ist darin zu sehen, daß von außen auf das Gehäuse einwirkende Kräfte über die Wellenlagerung auf die Welle geleitet werden, und damit die Laufgenauigkeit der Lagerung sowie die Genauigkeit der Winkelmessung beeinflussen.

In der DE-PS 2 906 432 ist eine Koppeleinrichtung für eine Winkelmeßeinrichtung beschrieben, bei der die Antriebswelle eines Rundtisches mit der Welle der Meßeinrichtung starr verbunden und das Gehäuse der Meßeinrichtung mit dem Stator des Rundtisches über eine Parallelführung gekoppelt sind.

Bei dieser Koppeleinrichtung besteht ebenfalls der Nachteil, daß von außen einwirkende Kräfte auf die Wellenlagerung und die Welle geleitet werden; außerdem können äußere Kräfte die Kupplungsgestänge und ihre Biegefedern beschädigen. Nachteilig ist ferner der relativ große Raumbedarf dieser Koppeleinrichtung.

Der Erfindung liegt die Aufgabe zugrunde, eine Winkelmeßeinrichtung der eingangs erwähnten Gattung anzugeben, bei der Winkelfehler und äußere Einflüsse auf die Meßgenauigkeit vermieden werden.

Diese Aufgabe wird erfindungsgemäß durch die kennzeichnenden Merkmale des Anspruchs 1 gelöst.

Die mit der Erfindung erzielten Vorteile bestehen insbesondere darin, daß die Kupplung keinen zusätzlichen Raum beansprucht und die unvermeidbaren Exzentrizitäten und Winkelfluchtungsfehler ohne Beeinträchtigung der Meßgenauigkeit ausgleicht; Winkelbeschleunigungen der Welle bewirken keine Verdrehung der Kupplung. Der Anbau der Winkelmeßeinrichtung an der Maschine erfolgt problemlos und ohne irgendwelche Justierungen. Die Lagerung der Teilscheibe und die Kupplung sind durch das Gehäuse optimal gegen Beschädigungen durch von außen wirkende Kräfte geschützt.

Vorteilhafte Weiterbildungen der Erfindung entnimmt man den Unteransprüchen.

Ausführungsbeispiele der Erfindung sind in der Zeichnung dargestellt.

Es zeigen

Figur 1 einen Querschnitt A—B einer Winkelmeßeinrichtung gemäß Figur 3,

Figur 2 einen weiteren Querschnitt C—D der Winkelmeßeinrichtung gemäß Figur 3,

Figur 3 einen Teilschnitt E—F der Winkelmeßeinrichtung gemäß Figur 2 mit einer Draufsicht auf eine Kupplung nach der Erfindung,

Figur 4 einen Querschnitt G—H einer weiteren Winkelmeßeinrichtung gemäß Figur 5 und

Figur 5 einen Querschnitt K—L der Winkelmeßeinrichtung gemäß Figur 4.

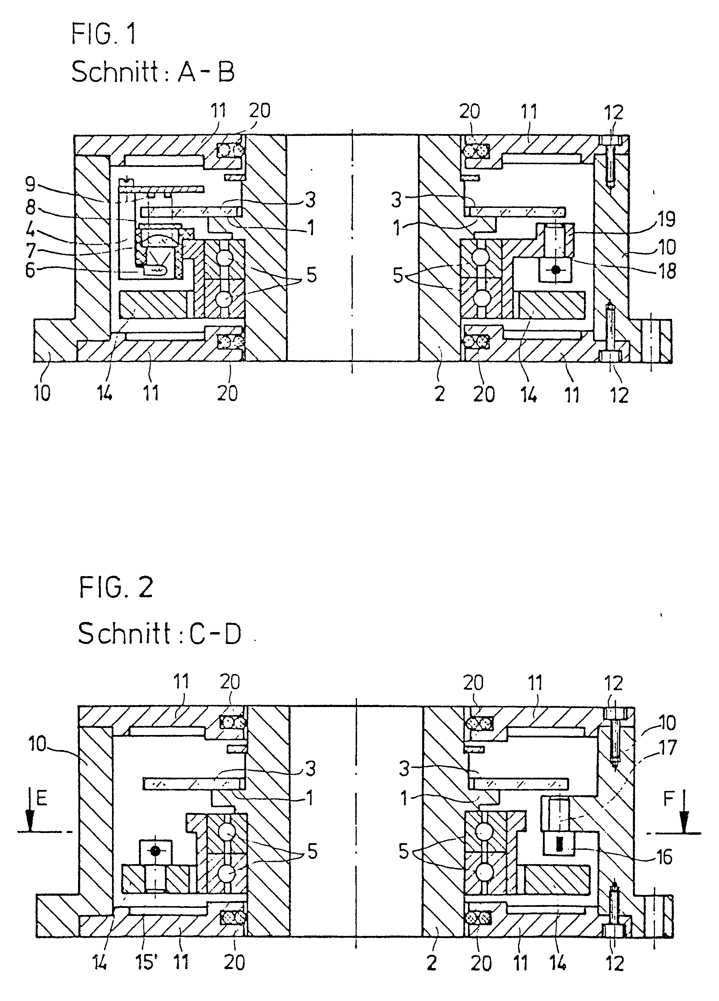

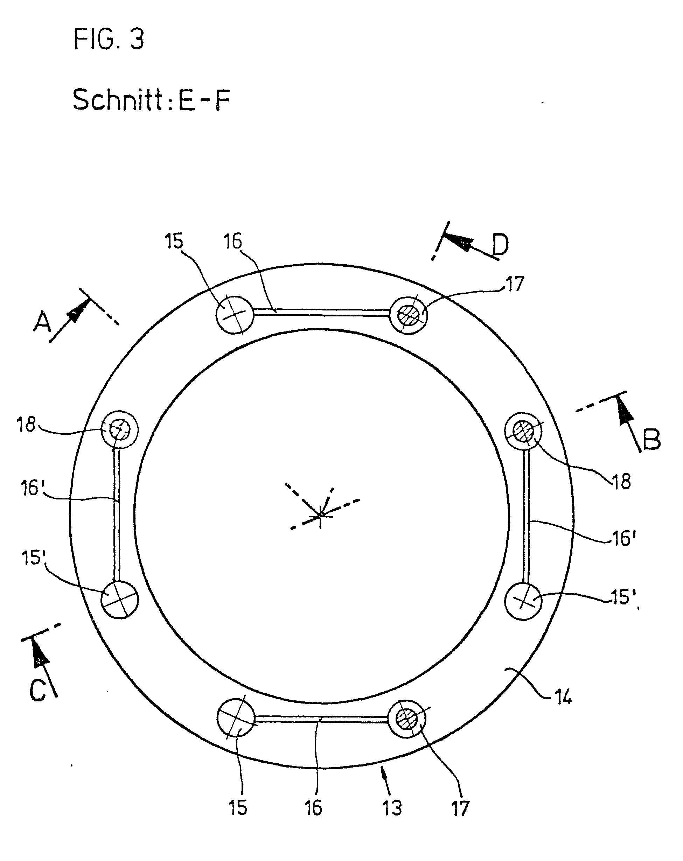

In Figur 1 und 2 ist in zwei Querschnitten A—B und C—D gemäß Figur 3 eine Winkelmeßeinrichtung gezeigt, bei der an einer Anlagefläche 1 einer drehbaren Hohlwelle 2 eine Teilscheibe 3 mit einer Winkelteilung beispielsweise durch Kleben befestigt ist. Eine photoelektrische Abtasteinheit 4 ist mittels Kugellager 5 auf der drehbaren Hohlwelle 2 gelagert und tastet mittels einer Lampe 6, einem Kondensor 7, einer Abtastplatte 8 und Photoelementen 9 die Winkelteilung der Teilscheibe 3 ab. In nicht dargestellter Weise sind die drehbare Welle 2 starr mit einer Spindel und ein Gehäuse 10 zum Schutz der Teilscheibe 3 und der Abtasteinheit 4 gegen äußere Einflüsse starr mit einem Bett einer Bearbeitungsmaschine oder Meßmaschine verbunden. An den Stirnseiten des Gehäuses 10 sind zwei Deckel 11 mittels Schrauben 12 befestigt, die jeweils eine Öffnung für die drehbare Welle 2 aufweisen. Dichtelemente 20 zwischen den Deckeln 11 und der drehbaren Welle 2 verhindern das Eindringen von Verunreinigungen in das Innere des Gehäuses 10 und sind so ausgebildet, daß die Relativbewegungen zwischen der drehbaren Welle 2 und dem Gehäuse 10 durch die Wellenexzentrizitäten und Winkelfluchtungsfehler elastisch ausgeglichen werden.

In Figur 3 ist ein Teilschnitt E—F de Winkelmeßeinrichtung gemäß Figur 2 mit einer Draufsicht auf eine Kupplung 13 zwischen der Abtasteinheit 4 und dem Gehäuse 10 gezeigt. Diese Kupplung 13 besteht aus einem im Gehäuse 10 konzentrisch zur drehbaren Welle 2 angeordneten Zwischenring 14, an dem mittels Bolzen 15 zwei zueinander und zur Ebene des Zwischenrings 14 parallele Blattfedern 16 befestigt und über Bolzen 17 mit dem Gehäuse 10 verbunden sind; an dem Zwischenring 14 sind weiter mittels Bolzen 15' zwei zueinander und zur Ebene des Zwischenrings 14 parallele Federdrähte 16' befestigt und über Bolzen 18 mit einem Träger 19 der Abtasteinheit 4 verbunden; die Federelemente 16, 16' bilden jeweils eine Parallelogrammführung. Die beiden Parallelogrammführungen wirken senkrecht zueinander.

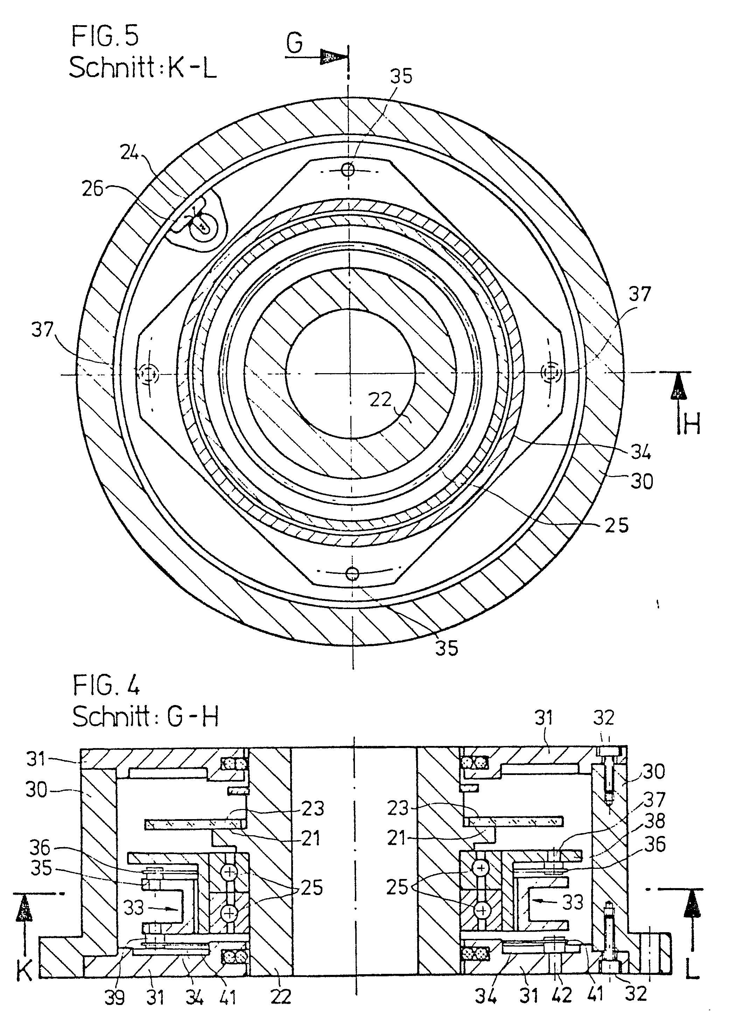

Eine weitere Winkelmeßeinrichtung ist in Figur 4 in einem Querschnitt G–H gemäß Figur 5 und in Figur 5 in einem Querschnitt K–L gemäß Figur 4 gezeigt, bei der an einer Anlagefläche 21 einer drehbaren Hohlwelle 22 eine Teilscheibe 23 mit einer Winkelteilung beispielsweise durch Kleben befestigt ist. Eine photoelektrische Abtasteinheit 24 ist mittels Kugellager 25 auf der drehbaren Hohlwelle 22 gelagert und tastet mittels einer Lampe 26, einem Kondensor, einer Abtastplatte und Photoelementen die Winkelteilung der Teilscheibe 23 ab.

In nicht dargestellter Weise sind die drehbare Welle 22 starr mit einer Spindel und ein Gehäuse 30 zum Schutz der Teilscheibe 23 und der Abtasteinheit 24 gegen äußere Einflüsse starr mit einem Bett einer Bearbeitungsmaschine oder Meßmaschine verbunden. An den Stirnseiten des Gehäuses 30 sind zwei Deckel 31 mittels Schrauben 32 befestigt, die jeweils eine Öffnung für die drehbare Welle 22 aufweisen. Dichtelemente 40 zwischen den Deckeln 31 und der drehbaren Welle 22 verhindern das Eindringen von Verunreinigungen in das Innere des Gehäuses 30 und sind so ausgebildet, daß die Relativbewegungen zwischen der drehbaren Welle 22 und dem Gehäuse 30 durch die Wellenexzentrizitäten und Winkelfluchtungsfehler elastisch ausgeglichen werden.

Eine Kupplung 33 zwischen der Abtasteinheit 24 und dem Gehäuse 30 besteht aus einem im Gehäuse 30 konzentrisch zur drehbaren Welle 22 angeordneten Zwischenring 34, an dem mittels zweier sich diametral gegenüberliegender Bolzen 35 eine Membranfeder 36 befestigt ist, die über zwei sich diametral gegenüberliegende Bolzen 37 mit einem Träger 38 der Abtasteinheit 24 verbunden ist; an dem Zwischenring 34 ist weiter mittels zweier sich diametral gegenüberliegender Bolzen 39 eine weitere Membranfeder 41 befestigt, die über zwei sich diametral gegenüberliegende Bolzen 42 mit dem Deckel 31 des Gehäuses 30 verbunden ist. Die Bolzen 35 sind gegenüber den Bolzen 37 und die Bolzen 39 gegenüber den Bolzen 42 jeweils um 90° versetzt.

In nicht gezeigter Weise kann die Kupplung zwischen der Abtasteinheit und dem Gehäuse auch aus zwei senkrecht zueinander angeordneten Linearführungen in einer Ebene senkrecht zur Wellenachse oder aus einer Parallelogrammführung in einer Ebene senkrecht zur Wellenachse und aus einem ebenen Gelenk bestehen, dessen Drehachse parallel zu dieser Ebene liegt.

Die vorgenannten Kupplungen erlauben zueinander senkrechte Translationsbewegungen in zur Wellenachse senkrechten Ebenen infolge von Exzentrizitäten und Winkelfluchtungsfehlern ohne Beeinträchtigung der Meßgenauigkeit.

**Patentansprüche**

1. Winkelmeßeinrichtung zur Messung der Winkellage zwischen einem stationären Objekt und einem relativ zu diesem stationären Objekt drehbaren Objekt, bei der in einem Gehäuse (10) die Teilung einer an einer drehbaren Welle (2) befestigten Teilscheibe (3), die mit dem drehbaren Objekt verbunden ist, von wenigstens einer Abtasteinheit (4) abgetastet wird, die mit dem stationären Objekt verbunden ist, dadurch gekennzeichnet, daß die drehbare Welle (2; 22) mitsamt der Teilscheibe (3; 23) starr mit dem drehbaren Objekt und das Gehäuse (10; 30) starr mit dem stationären Objekt verbunden sind und daß die Abtasteinheit (4; 24) auf der drehbaren Welle (2; 22) und/oder auf der Teilscheibe (3; 23) relativ zu diesen drehbar gelagert und mit dem Gehäuse (10; 30) über eine verdrehsteife Kupplung (13; 33) verbunden ist, die eine Drehbewegung der Abtasteinheit (4; 24) um die Achse der drehbaren Welle (2; 22) ausschließt.

2. Winkelmeßeinrichtung nach Anspruch 1, dadurch gekennzeichnet, daß die Kupplung (13) aus zwei senkrecht zueinander angeordneten Parallelogrammführungen (16, 16') besteht.

3. Winkelmeßeinrichtung nach Anspruch 1, dadurch gekennzeichnet, daß die Kupplung (33) aus zwei Membranfedergelenken (36, 41) besteht.

4. Winkelmeßeinrichtung nach Anspruch 1, dadurch gekennzeichnet, daß die Kupplung aus zwei senkrecht zueinander angeordneten Linearführungen besteht.

5. Winkelmeßeinrichtung nach Anspruch 1, dadurch gekennzeichnet, daß die Kupplung aus einer Parallelogrammführung und aus einem ebenen Gelenk besteht.

6. Winkelmeßeinrichtung nach Anspruch 2, dadurch gekennzeichnet, daß die Kupplung (13) aus Federelementen (16), die einmal mit einem Träger (19) der Abtasteinheit (4) und zum anderen mit einem Zwischenring (14) verbunden sind, und aus Federelementen (16') besteht, die einmal mit dem Zwischenring (14) und zum anderen mit dem Gehäuse (10) verbunden sind.

7. Winkelmeßeinrichtung nach Anspruch 6, dadurch gekennzeichnet, daß die Federelemente (16, 16') einen runden und/oder einen rechteckigen Querschnitt aufweisen.

8. Winkelmeßeinrichtung nach Anspruch 3, dadurch gekennzeichnet, daß die Kupplung (33) aus einer Membranfeder (36), die einmal an zwei sich diametral gegenüberliegenden Stellen mit einem Träger (38) der Abtasteinheit (24) und zum anderen an zwei dazu um 90° versetzten Stellen mit einem Zwischenring (34) verbunden ist, und aus einer Membranfeder (41) besteht, die einmal an zwei sich diametral gegenüberliegenden Stellen mit dem Zwischenring (34) und zum anderen an zwei dazu um 90° versetzten Stellen mit dem Gehäuse (30) verbunden ist.

9. Winkelmeßeinrichtung nach Anspruch 1, dadurch gekennzeichnet, daß das Gehäuse (10; 30) gegen die drehbare Welle (2; 22) mittels elastischer Dichtelemente (20; 40) abgedichtet ist.

## Claims

1. Angle measuring device for measuring the angular position between a stationary object and an object rotatable relative to this stationary object, in which the graduation of a graduated disc (3) fixed on a rotatable shaft (2) in a housing (10), which disc is connected to the rotatable object, is sensed by at least one sensor unit (4), which is connected to the stationary object, characterized in that the rotatable shaft (2; 22) together with the graduated disc (3; 23) is rigidly connected to the rotatable object and the housing (10; 30) is rigidly connected to the stationary object and in that the sensor unit (4; 24) is mounted on the rotatable shaft (2; 22) and/or on the graduated disc (3; 23) rotatable relative thereto and is connected to the housing (10; 30) through a rotation resistant coupling (13; 33), which prevents a rotational movement of the sensor unit (4; 24) about the axis of the rotatable shaft (2; 22).

2. Angle measuring device according to claim 1, characterized in that the coupling (13) consists of two parallelogram guides (16, 16') arranged perpendicular to one another.

3. Angle measuring device according to claim 1, characterized in that the coupling (33) consists of two diaphragm spring connections (36, 41).

4. Angle measuring device according to claim 1, characterized in that the coupling consists of two linear guides arranged perpendicular to one another.

5. Angle measuring device according to claim 1, characterized in that the coupling consists of a parallelogram guide and a flat link.

6. Angle measuring device according to claim 2, characterized in that the coupling (13) consists of spring elements (16) which are connected on the one hand to a carrier (19) of the sensor unit (4) and on the other hand to an intermediate ring (14), and of spring elements (16') which are connected on the one hand to the intermediate ring (14) and on the other hand to the housing (10).

7. Angle measuring device according to claim 6, characterized in that the spring elements (16, 16') have a round and/or a rectangular cross-section.

8. Angle measuring device according to claim 3, characterized in that the coupling (33) consists of a diaphragm spring (36) which is connected on the one hand at two diametrically opposite places to a carrier (38) of the sensor unit (24) and on the other hand at two places displaced 90° relative thereto to an intermediate ring (34), and of a diaphragm spring (41) which is connected on the one hand at two diametrically opposite places to the intermediate ring (34) and on the other hand at two places displaced 90° relative thereto to the housing (30).

9. Angle measuring device according to claim 1, characterized in that the housing (10; 30) is sealed relative to the rotatable shaft (2; 22) by means of elastic sealing elements (20; 40).

## Revendications

1. Dispositif de mesure d'angle, pour mesurer la position angulaire entre un objet stationnaire et un objet tournant par rapport à cet objet stationnaire, dans lequel, à l'intérieur d'une enceinte (10), la graduation d'un disque gradué (3) fixé sur un arbre tournant (2) et solidarisé à l'objet tournant est lue par au moins une unité de lecture (4) qui est solidarisée à l'objet stationnaire, caractérisé par le fait que l'arbre tournant (2; 22) et le disque gradué (3; 23) sont solidarisés rigidement à l'objet tournant, et l'enceinte (10; 30) est solidarisée rigidement à l'objet stationnaire, et par le fait que l'unité de lecture (4; 24) sur l'arbre tournant (2; 22) et/ou sur le disque gradué (3; 23), est montée à rotation par rapport à ceux-ci et est liée à l'enceinte (10; 30) par l'intermédiaire d'un accouplement (13; 33) rigide en torsion, lequel exclut tout mouvement de rotation de l'unité de lecture (4; 24) autour de l'axe de l'arbre tournant (2; 22).

2. Dispositif de mesure d'angle selon revendication 1, caractérisé par le fait que l'accouplement (13) est constitué par deux guides à parallélogramme (16, 16') agencés perpendiculairement l'un à l'autre.

3. Dispositif de mesure d'angle selon revendication 1, caractérisé par le fait que l'accouplement (33) est constitué par deux articulations à ressorts à membrane (36, 41).

4. Dispositif de mesure d'angle selon revendication 1, caractérisé par le fait que l'accouplement est constitué par deux guides linéaires agencés perpendiculairement l'un à l'autre.

5. Dispositif de mesure d'angle selon revendication 1, caractérisé par le fait que l'accouplement est constitué par un guide à parallélogramme et par une articulation plane.

6. Dispositif de mesure d'angle selon revendication 2, caractérisé par le fait que l'accouplement (13) est constitué par des éléments élastiques (16) qui sont liés d'une part à un support (19) de l'unité de lecture (4) et, d'autre part, à une bague intermédiaire (14), et par des éléments élastiques (16') qui sont liés, d'une part, à la bague intermédiaire (14) et, d'autre part, à l'enceinte (10).

7. Dispositif de mesure d'angle selon revendication 6, caractérisé par le fait que les éléments élastiques (16, 16') présentent une section droite circulaire et/ou rectangulaire.

8. Dispositif de mesure d'angle selon revendication 3, caractérisé par le fait que l'accouplement (33) est constitué par un ressort à membrane (36) qui est lié, d'une part, en deux endroits diamétralement opposés, à un support (38) de l'unité de lecture (24) et, d'autre part, en deux endroits décalés de 90° par rapport aux précédents, à une bague intermédiaire (34), et par un ressort à membrane (41) qui est lié, d'une part, en deux endroits diamétralement opposés, à la bague intermédiaire (34) et, d'autre part, en deux endroits décalés de 90° par rapport aux précédents, à l'enceinte (30)

9. Dispositif de mesure d'angle selon revendication 1, caractérisé par le fait que l'étanchéité entre l'enceinte (10; 30) et l'arbre tournant (2; 22) est réalisée au moyen d'éléments d'étanchéité élastiques (20; 40).

## FIG. 1
## Schnitt: A - B

## FIG. 2
## Schnitt: C-D

FIG. 3

Schnitt : E - F

FIG.5
Schnitt:K-L

FIG. 4
Schnitt: G-H